# DEMANDE DE BREVET EUROPEEN

(11) **EP 4 725 801 A1**
(43) Date de publication de la demande: **15.04.2026**
(21) Numéro de dépôt: 25205218.8
(22) Date de dépôt: 29.09.2025
(51) Int. Cl.: B62D 15/02, B60R 21/00, G08G 1/16, G08G 1/04, G08G 1/0967, G08G 1/0968

(54) **SYSTÈME D'AIDE À LA MANOEUVRE ET AU STATIONNEMENT D'UN VÉHICULE DANS UNE INFRASTRUCTURE**

(30) Priorité: 08.10.2024 FR 2410831
(71) Demandeur: AMPERE s.a.s., 92100 Boulougne-Billancourt (FR)
(72) Inventeur: AMBROISE, Stéphanie, 78288 Guyancourt (FR)
(74) Mandataire: Renault Group

(57) **Abrégé**

Système (10) d'aide à la manœuvre d'un véhicule (1) caractérisé en ce qu'il comprend :
- un moyen d'acquisition d'images mobile (12) configuré pour acquérir des images à l'avant du véhicule (1) lui-même équipé d'un moyen d'acquisition d'images disposé à l'avant dudit véhicule (1) ;
- un système de pilotage (16) configuré pour déplacer le moyen d'acquisition d'images mobile (12) pour suivre le véhicule (1) ;
- une unité centrale (20) comprenant un module de communication (23) configuré pour recevoir des images et y appliquer un traitement permettant d'identifier un obstacle (40) sur la trajectoire du véhicule (1) et pour communiquer avec un module de communication (3) du véhicule (1), et configuré pour communiquer avec un module de communication (13) du système de pilotage (16), le module de communication (23) de l'unité centrale (20) étant configuré pour transmettre des coordonnées de positionnement au module de communication (3)du véhicule (1) et au module de communication (13) du système de pilotage (16).

## Description

L'invention concerne de manière générale le domaine des procédés d'aide au pilotage de véhicules automobiles. L'invention concerne plus particulièrement un système d'aide à la manœuvre et au stationnement d'un véhicule dans une infrastructure. L'invention concerne en outre un procédé d'aide à la manœuvre et au stationnement d'un véhicule à partir d'un tel système.

Divers constructeurs automobiles proposent des systèmes qui permettent une automatisation de la tâche de stationnement d'un véhicule et une automatisation de certains types de déplacement d'un véhicule, tels qu'une marche avant en ligne droite, une marche arrière en ligne droite, un virage avec un rayon de courbure prédéterminé, etc. Ces systèmes d'aide au pilotage sont généralement des systèmes embarqués au sein même d'un véhicule.

Ces systèmes d'aide au pilotage sont généralement employés dans un environnement défini telle qu'une aire de stationnement par exemple. Une telle aire de stationnement, couramment appelée « parking », comprend généralement des voies de circulation délimitées et une pluralité d'emplacements individuels réservés au stationnement des véhicules.

Lorsqu'un véhicule équipé d'un système d'aide au pilotage circule de façon autonome, c'est-à-dire sans l'intervention d'un conducteur dans un tel environnement défini, la trajectoire suivie par ce véhicule est généralement libérée de tout obstacle. Toutefois, dans le cas où un obstacle est présent sur la trajectoire empruntée par le véhicule, une détection de cet obstacle est souhaitable, voire nécessaire, pour éviter au véhicule de percuter ledit obstacle.

En règle générale, la détection d'un obstacle est effectuée à l'aide d'un ou de plusieurs systèmes sensoriels placés sur le véhicule, et d'une méthode informatique permettant de traiter les données sensorielles reçues du ou des systèmes sensoriels. Un système sensoriel peut comprendre un émetteur et un ou plusieurs capteurs. Une liste non exhaustive de systèmes sensoriels peut comprendre : une caméra, un LIDAR, un radar et des capteurs à ultrasons, ou autres. Toutefois, malgré les données sensorielles disponibles, la détection précise et efficace d'un obstacle sur une trajectoire pose certains problèmes. Par ailleurs, un nombre élevé de capteurs au sein du système sensoriel augmente considérablement le coût final du véhicule automobile équipé d'un tel système sensoriel.

Le but de l'invention est de remédier aux inconvénients décrits ci-dessus. L'objectif de l'invention est d'utiliser un nombre limité de capteurs d'une infrastructure en parallèle d'un capteur embarqué du véhicule automobile circulant dans l'infrastructure. Les divers capteurs fournissent des données qui, une fois traitées, permettent de détecter un potentiel obstacle sur la trajectoire emprunté par le véhicule automobile.

A cet effet, l'invention porte sur un système d'aide à la manœuvre et au stationnement d'un véhicule dans une infrastructure, le véhicule étant équipé d'un moyen d'acquisition d'images disposé à l'avant dudit véhicule et d'un premier module de communication, le système étant caractérisé en ce qu'il comprend :
- au moins un moyen d'acquisition d'images mobile en translation selon une première direction sur un support de l'infrastructure, le moyen d'acquisition d'images mobile étant configuré pour acquérir des images d'un environnement à l'avant du véhicule circulant de manière autonome dans l'infrastructure suivant une trajectoire prédéterminée ;
- un système de pilotage configuré pour déplacer le moyen d'acquisition d'images mobile sur le support de l'infrastructure de manière à suivre le véhicule circulant dans l'infrastructure, le système de pilotage et le au moins un moyen d'acquisition d'images mobile étant équipé d'un deuxième module de communication ;
- une unité centrale comprenant un troisième module de communication configuré pour recevoir des images acquises par le moyen d'acquisition d'images disposé à l'avant dudit véhicule et des images acquises par le moyen d'acquisition d'images mobile, l'unité centrale étant configurée pour appliquer un traitement d'image auxdites images permettant d'identifier un obstacle sur la trajectoire du véhicule circulant dans l'infrastructure, le troisième module de communication de l'unité centrale étant également configuré pour communiquer avec le premier module de communication du véhicule pour échanger des données concernant ledit véhicule, et configuré pour communiquer avec le deuxième module de communication du système de pilotage et du moyen d'acquisition d'images mobile, le troisième module de communication de l'unité centrale étant configuré pour transmettre des coordonnées de positionnement, notamment des coordonnées GPS d'une trajectoire, au premier module de communication du véhicule et/ou des coordonnées de positionnement au deuxième module de communication du système de pilotage et du moyen d'acquisition d'images mobile.

Selon un mode de réalisation, le moyen d'acquisition d'images mobile est configuré pour reproduire la focale de l'image et les résolutions horizontale et verticale de l'image du moyen d'acquisition d'images du véhicule.

Selon un mode de réalisation, le moyen d'acquisition d'images mobile en translation est également mobile en rotation autour d'un premier axe de rotation de sorte que le système de pilotage puisse pivoter le moyen d'acquisition d'images mobile autour dudit premier axe de rotation.

Selon un mode de réalisation, le moyen d'acquisition d'images mobile est également mobile en rotation autour d'un deuxième axe de rotation de sorte que le système de pilotage puisse pivoter le moyen d'acquisition d'images mobile autour dudit deuxième axe de rotation, ce deuxième axe de rotation est sensiblement perpendiculaire au premier axe de rotation.

Selon un mode de réalisation, le moyen d'acquisition d'images mobile est également mobile en translation selon une deuxième direction sur un support de l'infrastructure, la deuxième direction étant sensiblement perpendiculaire à la première direction.

Selon un mode de réalisation, le système comprend deux moyens d'acquisition d'images mobiles, les deux moyens d'acquisition d'images étant agencés sur un support situé au-dessus du véhicule, les deux moyens d'acquisition d'images mobiles étant orientés vers le sol de l'infrastructure de sorte à acquérir des images d'un environnement à l'avant du véhicule circulant dans l'infrastructure, un premier moyen d'acquisition d'images mobile étant aligné verticalement avec le moyen d'acquisition d'images disposé à l'avant dudit véhicule, un deuxième moyen d'acquisition d'images mobile étant juxtaposé longitudinalement devant le premier moyen d'acquisition d'images mobile.

Selon un mode de réalisation, le système de pilotage est configuré pour déplacer le deuxième moyen d'acquisition d'images mobile indépendamment du premier moyen d'acquisition d'images mobile.

Selon un mode de réalisation, le support comprend un rail ou un agencement de rails et le système de pilotage est configuré pour déplacer le au moins un moyen d'acquisition d'images mobile le long dudit rail ou le long desdits rails de l'agencement.

L'invention porte également sur un procédé d'aide à la manœuvre et au stationnement d'un véhicule à partir d'un système tel que décrit ci-dessus, le procédé étant caractérisé en ce qu'il comprend les étapes suivantes :
- le premier module de communication du véhicule envoie des données dudit véhicule au troisième module de communication de l'unité centrale ;
- le moyen d'acquisition d'images mobile est positionné à la même coordonnée longitudinale que le moyen d'acquisition d'images agencé sur le véhicule ;
- le moyen d'acquisition d'images agencé sur le véhicule acquiert une première image de l'environnement à l'avant du véhicule ;
- le premier module de communication du véhicule envoie la première image acquise au troisième module de communication de l'unité centrale de l'infrastructure ;
- l'unité centrale génère une image sans distorsion à partir de l'image envoyée par le premier module de communication du véhicule ;
- la position du moyen d'acquisition d'images mobile est mise à jour ;
- le moyen d'acquisition d'images mobile acquiert une deuxième image de l'environnement à l'avant du véhicule ;
- le deuxième module de communication du moyen d'acquisition d'image mobile envoie la deuxième image acquise au troisième module de communication de l'unité centrale de l'infrastructure ;
- l'unité centrale génère une image sans distorsion à partir de l'image reçue;
- l'unité centrale applique un traitement d'image aux images sans distorsion pour détecter un ou plusieurs potentiels obstacles sur la trajectoire du véhicule.

Selon un mode de réalisation, le procédé comprend également les étapes suivantes lorsqu'un obstacle est détecté sur la trajectoire du véhicule :
- le troisième module de communication de l'unité centrale envoie une commande au deuxième module de communication du système de pilotage du moyen d'acquisition d'image mobile pour faire pivoter ledit moyen d'acquisition d'image mobile autour du deuxième axe de rotation de sorte à centrer les images acquises par le moyen d'acquisition d'image mobile sur l'obstacle détecté ;
- le moyen d'acquisition d'images mobile acquiert une troisième image de l'environnement à l'avant du véhicule ;
- le deuxième module de communication du moyen d'acquisition d'image mobile envoie la troisième image acquise au troisième module de communication de l'unité centrale de l'infrastructure ;
- l'unité centrale génère une image sans distorsion à partir des images reçues par le deuxième module de communication du moyen d'acquisition d'image mobile et par le premier module de communication du moyen d'acquisition d'image du véhicule ;
- l'unité centrale applique un méthode de stéréovision pour évaluer la distance entre le véhicule et l'obstacle détecté.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre un système d'aide à la manœuvre et au stationnement d'un véhicule dans une infrastructure selon un premier mode de réalisation.
La figure 2 illustre un exemple d'une image acquise par le moyen d'acquisition d'image du véhicule.
La figure 3 illustre un exemple d'une image acquise par le moyen d'acquisition d'image mobile du système de la figure 1.
La figure 4 illustre un exemple d'une image sans distorsion générée par l'unité centrale à partir de l'image de la figure 2.
La figure 5 illustre un exemple d'une image sans distorsion générée par l'unité centrale à partir de l'image de la figure 3.
La figure 6 illustre un exemple d'une image obtenue à la suite d'un changement de focale à partir de l'image de la figure 5.
La figure 7 illustre un exemple d'une image sans distorsion générée par l'unité centrale à partir d'une image acquise par un moyen d'acquisition d'image d'un véhicule de référence lors d'une phase de calibration.
La figure 8 illustre un exemple de résultat obtenu à la suite d'un traitement d'image appliqué à l'image de la figure 7.
La figure 9 illustre un exemple d'une image sans distorsion générée par l'unité centrale à partir d'une image acquise par le moyen d'acquisition d'image du véhicule dans le cas où un obstacle est détecté sur la trajectoire du véhicule.
La figure 10 illustre un exemple d'une image sans distorsion générée par l'unité centrale à partir d'une image acquise par le moyen d'acquisition d'image mobile du système dans le cas où un obstacle est détecté sur la trajectoire du véhicule.
La figure 11 illustre un exemple d'un résultat obtenu à la suite d'un traitement d'image appliqué aux images des figures 9 et 10.
La figure 12 illustre un exemple d'une image acquise par le moyen d'acquisition d'image mobile du système à la suite d'un repositionnement dudit moyen d'acquisition d'image mobile.
La figure 13 illustre un exemple d'images obtenues avec une méthode de stéréovision appliquée par l'unité centrale.
La figure 14 illustre un système selon un deuxième mode de réalisation.
La figure 15 illustre des exemples d'images acquises par les moyens d'acquisition d'image mobile du système de la figure 14.

Le système 10 d'aide à la manœuvre et au stationnement faisant l'objet de cette demande de brevet fait intervenir divers éléments d'une infrastructure 100 avec des éléments d'un véhicule 1 automobile, et notamment d'un véhicule 1 automobile au moins partiellement automatisé. Dans les modes de réalisation des systèmes 10 décrits ici, certains éléments sont propres à l'infrastructure 100 tandis que d'autres éléments sont propres au véhicule 1 automobile.

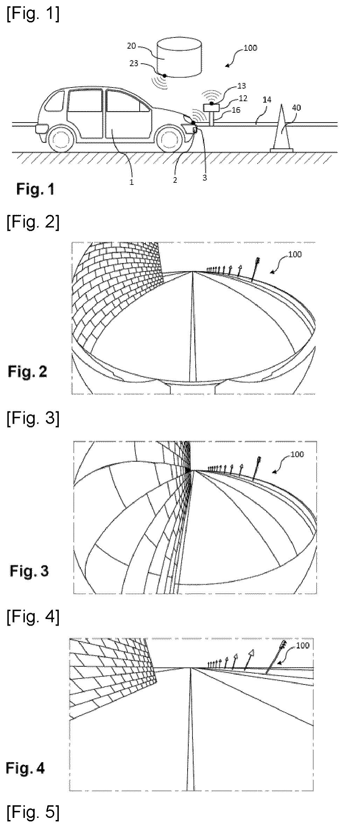

La figure 1 illustre schématiquement un véhicule 1 automobile qui circule dans une infrastructure 100. L'infrastructure 100 peut se présenter sous la forme d'une aire de stationnement, d'un garage ou tout autre environnement avec un ensemble d'emplacements pour y garer des véhicules 1 automobiles. L'infrastructure 100 peut être extérieure, ou souterraine. Une telle infrastructure 100 est mise à la disposition d'usagers de véhicules 1 automobiles pour pouvoir stationner leur véhicule 1. Dans le cas où le véhicule 1 est au moins partiellement automatisé, un usager peut notamment laisser son véhicule 1 à l'entrée de l'infrastructure 100 par exemple et le système 10 d'aide à la manœuvre et au stationnement se charge alors de déplacer le véhicule 1 automobile jusqu'à un emplacement de stationnement adéquat.

Le véhicule 1 automobile peut par exemple comprendre un dispositif de commande configuré pour commander un dispositif de direction et d'un dispositif d'entraînement et de freinage du véhicule 1 automobile. Dans un mode de réalisation préférentiel, le système 10 d'aide à la manœuvre et au stationnement du véhicule 1 automobile peut permettre au véhicule 1 de parcourir une trajectoire prédéterminée de façon autonome et de réaliser une manœuvre pour garer ledit véhicule 1 sur une place de stationnement inoccupée de manière autonome.

La trajectoire que le véhicule 1 est amené à suivre lorsqu'il circule dans l'infrastructure 100 est prédéterminée, dans le sens où des coordonnées GPS représentative de ladite trajectoire sont connues à l'avance. Ces coordonnées ont par exemple été établies et enregistrées lors d'une phase de calibration du système au cours de laquelle un véhicule de référence a parcouru ladite trajectoire avant la mise en service de l'infrastructure 100.

Le véhicule 1 est équipé d'un moyen d'acquisition d'images 2 disposé à l'avant dudit véhicule 1. Un tel moyen d'acquisition d'images 2 est par exemple agencé au niveau de la calandre du véhicule 1, par exemple derrière ladite calandre, au-dessus d'une plaque d'immatriculation du véhicule 1, à quelques dizaines de centimètres du sol (par exemple 60 cm). Le moyen d'acquisition d'images 2 est de préférence latéralement centré, c'est-à-dire agencé au milieu de la face avant du véhicule 1.

Généralement, un tel moyen d'acquisition d'images 2 est orienté vers l'avant avec un angle d'inclinaison, de 40° par exemple, de sorte à acquérir des images du sol juste devant la face avant du véhicule 1.

Le moyen d'acquisition d'images 2 est par exemple une caméra avec un objectif grand angle (« fish-eye en anglais »), ce qui permet d'acquérir des images avec un angle de vue horizontal proche de 180°, voire supérieur à 180°. Les images obtenues avec un tel moyen d'acquisition d'images 2 permettent de voir simultanément le sol juste devant la face avant du véhicule 1 et les environs à une distance plus importante. La figure 2 donne un exemple d'une image acquise avec un tel moyen d'acquisition d'images. Un objectif grand angle introduit généralement une distorsion des images obtenues, cette distorsion est également visible sur la figure 2.

En outre, le véhicule 1 est équipé d'un premier module de communication 3 qui permet de transférer ces images, c'est-à-dire de les envoyer à un récepteur extérieur au véhicule 1 automobile. Plus généralement, le premier module de communication 3 du véhicule 1 permet d'échanger des données, c'est-à-dire qu'il peut envoyer non seulement les images acquises par le moyen d'acquisition d'images 2 disposé à l'avant dudit véhicule 1, mais également d'autres types de données (des exemples de données seront indiquées plus tard dans la description). Par ailleurs, le premier module de communication 3 est également configuré pour réceptionner des données qui lui sont envoyées par un autre module de communication qui est extérieur au véhicule 1.

Le système 10 d'aide à la manœuvre et au stationnement comprend au moins un moyen d'acquisition d'images mobile 12, ce moyen d'acquisition d'images mobile 12 peut être une caméra avec un objectif grand angle. Le moyen d'acquisition d'images mobile 12 est configuré pour acquérir des images d'un environnement à l'avant du véhicule 1 circulant de manière autonome dans l'infrastructure 100 suivant une trajectoire prédéterminée. La figure 3 montre un exemple d'une image obtenue avec un tel moyen d'acquisition d'images mobile 12.

Le moyen d'acquisition d'images mobile 12 est mobile en translation selon une première direction sur un support 14 de l'infrastructure 100. Plus précisément, le système 10 comprend un système de pilotage 16 configuré pour déplacer le moyen d'acquisition d'images mobile 12 sur le support 14 de l'infrastructure 100 de manière à suivre le véhicule 1 circulant dans l'infrastructure 100.

En complément, et selon une variante optionnelle du mode de réalisation décrit ci-dessus, le moyen d'acquisition d'images mobile 12 est également mobile en translation selon une deuxième direction sur un support 14 de l'infrastructure 100, la deuxième direction étant sensiblement perpendiculaire à la première direction. Ainsi, si la première direction de translation est horizontale, la deuxième direction de translation est alors verticale. Ce degré de mobilité supplémentaire permet au système de pilotage 16 du moyen d'acquisition d'images mobile 12 d'ajuster la hauteur du moyen d'acquisition d'images mobile 12. En particulier, le moyen d'acquisition d'images mobile 12 peut être placé à la même distance du sol que le moyen d'acquisition d'images 2 agencé sur la face avant du véhicule 1 automobile. La hauteur à laquelle est située le moyen d'acquisition d'images 2 du véhicule 1 peut être différente d'un véhicule à un autre. Le degré de mobilité supplémentaire permet au système de pilotage 16 du moyen d'acquisition d'images mobile 12 de reproduire le plus fidèlement possible la position du moyen d'acquisition d'images 2 du véhicule 1.

Optionnellement, le moyen d'acquisition d'images mobile 12 en translation est également mobile en rotation autour d'un premier axe de rotation de sorte que le système de pilotage 16 puisse pivoter le moyen d'acquisition d'images mobile 12 autour dudit premier axe de rotation. Ce premier axe de rotation est notamment un axe horizontal. Ceci permet d'incliner le moyen d'acquisition d'image mobile 12 de façon à reproduire l'angle d'inclinaison du moyen d'acquisition d'image 2 du véhicule 1. Une telle inclinaison du moyen d'acquisition d'image mobile 12 permet alors d'acquérir des images de l'environnement à l'avant du véhicule 1, et plus particulièrement à acquérir des images du sol juste devant la face avant du véhicule 1. L'inclinaison du moyen d'acquisition d'image 2 du véhicule 1 peut être différent d'un véhicule à un autre, c'est pourquoi une telle mobilité du moyen d'acquisition d'images mobile 12 en rotation autour d'un premier axe de rotation est particulièrement appréciable.

Avoir un même angle d'inclinaison pour le moyen d'acquisition d'images 2 du véhicule 1 et pour le moyen d'acquisition d'images mobile 12 du système 10 d'aide à la manœuvre permet d'avoir des images similaires de l'environnement à l'avant du véhicule 1, ce qui facilite le traitement des images acquises au cours de la progression du véhicule 1 le long de la trajectoire prédéterminée.

En complément, selon une variante optionnelle du mode de réalisation décrit ci-dessus, le moyen d'acquisition d'images mobile 12 est également mobile en rotation autour d'un deuxième axe de rotation de sorte que le système de pilotage 16 puisse pivoter le moyen d'acquisition d'images mobile 12 autour dudit deuxième axe de rotation. Ce deuxième axe de rotation est sensiblement perpendiculaire au premier axe de rotation. Ainsi, si le premier axe de rotation est un axe horizontal, le deuxième axe de rotation est un axe vertical. Ce degré de mobilité supplémentaire permet au système de pilotage 16 du moyen d'acquisition d'images mobile 12 d'appliquer un mouvement de lacet au moyen d'acquisition d'images mobile 12.

Selon un mode de réalisation préférentiel, le support 14 évoqué précédemment comprend un rail ou un agencement de rails. Dans ce mode de réalisation préférentiel, le système de pilotage 16 est configuré pour déplacer le au moins un moyen d'acquisition d'images mobile 12 le long dudit rail ou le long desdits rails de l'agencement. Le ou les rails s'étendent par exemple parallèlement au sol de l'infrastructure 100, notamment selon une direction sensiblement horizontale si le sol de l'infrastructure 100 est globalement plat, ou selon une direction inclinée par rapport à l'horizontale si le sol est en pente.

Un tel rail ou un tel agencement de rails permettent de guider le système de pilotage 16 du au moins un moyen d'acquisition d'images mobile 12 de manière fiable et répétable. Ce rail ou cet agencement de rail peut également permettre d'assurer la stabilité du moyen d'acquisition d'images mobile 12 au cours de sa trajectoire.

Dans un premier mode de réalisation, le rail ou l'agencement de plusieurs rails qui forme le support 14 pour le moyen d'acquisition d'images mobile 12 est par exemple agencé au niveau d'un mur de l'infrastructure 100 dans laquelle circule le véhicule 1 automobile. De cette façon, le système de pilotage 16 peut déplacer la caméra le long du mur à côté du véhicule 1 afin de suivre celui-ci tout en acquérant des images de l'environnement à l'avant du véhicule 1.

Ainsi, selon un mode de réalisation, les coordonnées de positionnement successivement occupées par le moyen d'acquisition d'images mobiles 12 concordent avec les coordonnées de positionnement successivement occupées par le véhicule 1. La première direction selon laquelle le système de pilotage 16 déplace le moyen d'acquisition d'images mobile 12 par rapport au support 14 est donc sensiblement la même direction que celle empruntée par le véhicule 1 automobile lorsqu'il parcourt de façon autonome une trajectoire prédéterminée dans l'infrastructure 100.

Autrement dit, le moyen d'acquisition d'images mobile 12 et le véhicule 1 au moins partiellement automatisé progressent ensemble, de préférence à la même vitesse, le long du trajet emprunté par ledit véhicule 1. Au cours de ce trajet, le moyen d'acquisition d'images 2 agencé sur la face avant du véhicule 1 automobile et le au moins un moyen d'acquisition d'images mobile 12 du système 10 d'aide à la manœuvre acquiert chacun une série d'image avec des points de vue certes différents, mais tout de même très similaires, comme l'illustrent les figures 2 et 3.

Le système de pilotage 16 et le moyen d'acquisition d'images mobile 12 sont également équipés d'un deuxième module de communication 13. Ce deuxième module de communication 13 permet d'une part de transférer les images acquises par le moyen d'acquisition d'images mobile 12 à un récepteur extérieur au véhicule 1 automobile, et d'autre part de recevoir des instructions de déplacement indiquant au système de pilotage 16 où et comment doit être positionné le moyen d'acquisition d'images mobile 12. Le deuxième module de communication 13 peut par exemple comprendre un émetteur au niveau du moyen d'acquisition d'images mobile 12 pour envoyer les images acquises et il peut comprendre un récepteur agencé au niveau du système de pilotage 16 pour recevoir les instructions de déplacement qui seront ensuite répercutées au moyen d'acquisition d'images mobile 12.

Le système 10 d'aide à la manœuvre comprend par ailleurs une unité centrale 20 qui comprend elle aussi un troisième module de communication 23. Le troisième module de communication 23 de l'unité centrale 20 est configuré pour communiquer d'une part avec le premier module de communication 3 du véhicule 1, et configuré d'autre part pour communiquer avec le deuxième module de communication 13 du système de pilotage 16 et du moyen d'acquisition d'images mobile 12.

Plus particulièrement, le troisième module de communication 23 de l'unité centrale 20 est configuré pour transmettre des coordonnées de positionnement, notamment des coordonnées GPS d'une trajectoire, au premier module de communication 3 du véhicule 1 et/ou des coordonnées de positionnement au deuxième module de communication 13 du système de pilotage 16 et du moyen d'acquisition d'images mobile 12. De cette manière, l'unité centrale 20 peut permettre la cohérence entre les déplacements du moyen d'acquisition d'images mobile 12 et les déplacements du véhicule 1 automobile. En particulier, l'unité centrale 20 peut ajuster les déplacements du moyen d'acquisition d'images mobile 12 en fonction de la position du véhicule 1 automobile circulant dans l'infrastructure 100. Le troisième module de communication 23 de l'unité centrale 20 envoie au premier module de communication 3 du véhicule 1 à une fréquence donnée, par exemple tous les 100ms, les coordonnées GPS à atteindre, dictant ainsi au véhicule 1 la trajectoire à suivre lorsqu'il circule dans l'infrastructure 100.

De plus, le troisième module de communication 23 de l'unité centrale 20 est configuré pour communiquer avec le premier module de communication 3 du véhicule 1 pour échanger des données concernant ledit véhicule 1. Ces données sont par exemple la position du moyen d'acquisition d'image 2 dans le repère du véhicule 1, les dimensions du véhicule 1, en particulier sa longueur, sa largeur et sa hauteur, ainsi que la largeur et hauteur du capteur du moyen d'acquisition d'image 2 agencé sur la face avant du véhicule 1 automobile, la résolution horizontale et verticale des images acquises et les coefficients polynomiaux décrivant la distorsion due à la lentille de type « fish-eye » dudit moyen d'acquisition d'image 2.

Ce troisième module de communication 23 de l'unité centrale 20 est également configuré pour recevoir des images acquises par le moyen d'acquisition d'images 2 disposé à l'avant dudit véhicule 1, par l'intermédiaire du premier module de communication 3, et des images acquises par le moyen d'acquisition d'images mobile 12, par l'intermédiaire du deuxième module de communication 13.

L'unité centrale 20 est par ailleurs configurée pour appliquer un traitement d'image auxdites images, l'objectif de ce traitement est d'identifier un potentiel obstacle 40 présent sur la trajectoire du véhicule 1 circulant dans l'infrastructure 100. Ce traitement d'image fait partie d'un procédé d'aide à la manœuvre et au stationnement d'un véhicule 1 à partir d'un système tel que décrit ci-dessus. Le procédé comprend une pluralité d'étapes explicitées ci-dessous.

Au cours d'une première étape du procédé, le premier module de communication 3 du véhicule 1 envoie des données dudit véhicule 1 au troisième module de communication 23 de l'unité centrale 20. Cette étape a par exemple lieu au moment où un utilisateur dépose son véhicule 1 à l'entrée de l'infrastructure 100, ou peu de temps après ce dépôt.

Dans l'étape suivante, le moyen d'acquisition d'images mobile 12 est positionné à la même coordonnée longitudinale que le moyen d'acquisition d'images 2 agencé sur le véhicule 1. Autrement dit, le moyen d'acquisition d'images mobile 12 s'aligne avec le moyen d'acquisition d'images 2 agencé sur le véhicule 1 afin de suivre ledit véhicule 1 au cours de sa trajectoire prédéterminée dans l'infrastructure 100.

Ensuite, le moyen d'acquisition d'images 2 agencé sur le véhicule 1 acquiert une première image de l'environnement à l'avant du véhicule.

La figure 2 donne un exemple d'une telle première image. Puis le premier module de communication 3 du véhicule 1 envoie la première image acquise au troisième module de communication 23 de l'unité centrale 20 de l'infrastructure 100. Ensuite l'unité centrale 20 génère une image sans distorsion à partir de la première image envoyée par le premier module de communication 3 du véhicule 1. La figure 4 montre un exemple d'une telle image.

Lorsque le véhicule 1 progresse de façon autonome le long de la trajectoire prédéterminée jusqu'à son emplacement de stationnement, la position du moyen d'acquisition d'images mobile 12 est mise à jour, c'est-à-dire que le moyen d'acquisition d'images mobile 12 est positionné à la même coordonnée longitudinale que le moyen d'acquisition d'images 2 agencé sur le véhicule 1 automobile, et ce tout au long du trajet du véhicule 1 circulant dans l'infrastructure 100. Autrement dit, le moyen d'acquisition d'images mobile 12 et le véhicule 1 au moins partiellement automatisé progressent ensemble, de préférence à la même vitesse, le long du trajet emprunté par ledit véhicule 1.

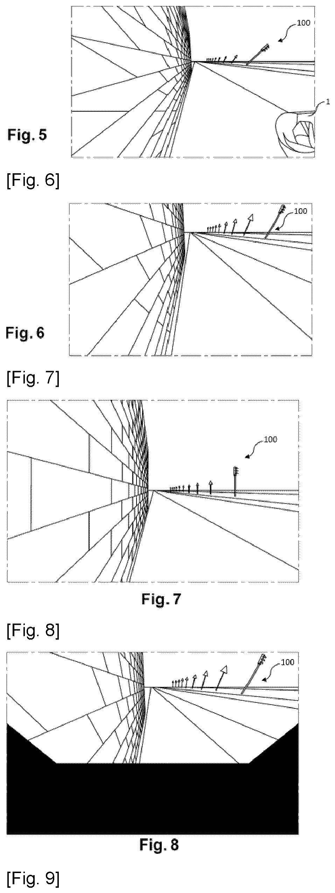

Le moyen d'acquisition d'images mobile 12 acquiert une deuxième image de l'environnement à l'avant du véhicule 1. La figure 3 donne un exemple d'une telle deuxième image. Puis le deuxième module de communication 13 du moyen d'acquisition d'image mobile 12 envoie la deuxième image acquise à l'unité centrale 20 de l'infrastructure 100. Ensuite l'unité centrale 20 génère une image sans distorsion à partir de la deuxième image reçue. La figure 5 montre un exemple d'une telle image.

Enfin l'unité centrale 20 applique un traitement d'image aux images sans distorsion pour détecter un ou plusieurs potentiels obstacles 40 sur la trajectoire du véhicule 1.

D'une manière générale, le moyen d'acquisition d'images 2 agencé sur le véhicule 1 acquiert une série de premières images de l'environnement à l'avant du véhicule 1 tout au long du trajet du véhicule 1.

De manière similaire, le moyen d'acquisition d'images mobile 12 acquiert une série de deuxièmes images de l'environnement à l'avant du véhicule 1 tout au long du trajet du véhicule 1.

Optionnellement, le procédé peut comprendre une étape supplémentaire au cours de laquelle l'unité centrale 20 applique un changement de focale ainsi qu'un changement de résolutions horizontale et verticale aux deuxièmes images acquises par le deuxième module de communication 13 du moyen d'acquisition d'image mobile 12, images dans lesquelles les distorsions dues au grand angle du moyen d'acquisition d'image mobile 12 ont été corrigées. La figure 6 montre un exemple du résultat obtenu à partir de l'image de la figure 5 à laquelle un changement de focale ainsi qu'un changement de résolutions horizontale et verticale ont été appliqués. Ces changements modifient notamment le champ de vision dans l'image résultante.

Pour effectuer cette étape, et selon un mode de réalisation particulier du système 10 d'aide à la manœuvre et au stationnement d'un véhicule 1, le moyen d'acquisition d'images mobile 12 est configuré pour reproduire la focale de l'image et les résolutions horizontale et verticale de l'image du moyen d'acquisition d'images 2 du véhicule 1. Pour ce faire, le premier module de communication 3 du véhicule 1 envoie au troisième module de communication 23 de l'unité centrale 20 des données spécifiques au véhicule 1 et des données spécifiques au moyen d'acquisition d'images 2 du véhicule 1, puis le troisième module de communication 23 de l'unité centrale 20 transmet ces données au deuxième module de communication 13 du système de pilotage 16 et du moyen d'acquisition d'images mobile 12.

Ces données sont par exemple la position de la caméra dans le repère véhicule 1, la longueur, la largeur et la hauteur du véhicule 1, la largeur et la hauteur du capteur du moyen d'acquisition d'images 2, la résolution horizontale et verticale du moyen d'acquisition d'images 2 et les coefficients polynomiaux décrivant la distorsion.

Une fois ces données reçues par le deuxième module de communication 13 du système de pilotage 16 et du moyen d'acquisition d'images mobile 12, les paramètres de ce dernier sont modifiés de sorte à reproduire la même focale de l'image du moyen d'acquisition d'images 2 du véhicule 1 et de sorte à adapter les résolutions horizontale et verticale de l'image pour qu'elles soient identiques ou du moins similaires à celles du moyen d'acquisition d'images 2 du véhicule 1. Une telle reproduction des paramètres du moyen d'acquisition d'images 2 du véhicule 1 au niveau du moyen d'acquisition d'images mobile 12 du système permet un traitement d'image rapide et efficace, de manière à rendre la détection d'un obstacle plus fiable.

Concernant le traitement d'image appliqué par l'unité centrale 20, l'unité centrale 20 compare les images reçues par le moyen d'acquisition d'images 2 du véhicule 1 à des images issues d'une phase de calibration survenue préalablement. La figure 7 donne un exemple d'une telle image acquise pendant une phase de calibration par un moyen d'acquisition d'images disposé au niveau d'une face avant d'un véhicule de référence. Dans l'exemple de l'image donné à la figure 7, les distorsions dues au grand angle du moyen d'acquisition d'image ont déjà été traitées, c'est pourquoi ces distorsions n'apparaissent pas sur la figure 7.

Pendant la phase de calibration, qui est par exemple effectuée lors de la mise en place de l'infrastructure 100, avant sa mise en service, un véhicule de référence parcourt un ou plusieurs exemples de trajectoires, par exemple depuis l'entrée de l'infrastructure 100 jusqu'à un emplacement de stationnement dans cette infrastructure 100. Il y a notamment autant de trajectoires que d'emplacements de stationnement dans l'infrastructure 100. Chaque trajectoire prédéterminée permet alors de guider le véhicule 1 automobile au moins partiellement automatisé vers un emplacement de stationnement précis, propre à la trajectoire, lorsque l'infrastructure 100 est fonctionnelle et mise en service.

Au cours de cette phase de calibration, la ou les trajectoires empruntées par le véhicule de référence sont exemptes de tout obstacle. Les coordonnées GPS du véhicule de référence parcourant cette ou ces trajectoires sont enregistrées périodiquement de manière à les garder en mémoire afin de les utiliser comme référence lorsque l'infrastructure 100 sera mise en service, c'est-à-dire lorsqu'un véhicule 1 au moins partiellement automatisé autre que le véhicule de référence circule dans l'infrastructure 100.

Toujours pendant cette phase de calibration, les positions du au moins un moyen d'acquisition d'images mobile 12, qui suit le véhicule de référence parcourant la ou les trajectoires, sont également enregistrées. A chaque coordonnée de positionnement enregistrée pour le au moins un moyen d'acquisition d'images mobile 12, une image acquise par celui-ci est également enregistrée.

Lorsqu'un véhicule 1 au moins partiellement automatisé circule dans l'infrastructure 100 mise en service, l'unité centrale 20 compare les images reçues par le moyen d'acquisition d'images 2 du véhicule 1 aux images issues de la phase de calibration. Plus particulièrement, l'unité centrale 20 peut être configurée pour soustraire une image issue de la phase de calibration associée à une position spécifique du véhicule de référence à une image acquise par le moyen d'acquisition d'images 2 du véhicule 1 pour cette même position sur son parcours.

Pour permettre une comparaison fiable de ces deux images, l'unité centrale 20 peut appliquer un traitement d'image aux images issues de la phase de calibration pour l'ensemble des positions occupées par le véhicule de référence au cours d'une trajectoire parcourue pendant la phase de calibration. En particulier, l'unité centrale 20 peut appliquer un angle d'inclinaison auxdites images pour refléter l'inclinaison du moyen d'acquisition d'images 2 du véhicule 1 circulant dans l'infrastructure 100. Autrement dit, l'unité centrale 20 peut appliquer un angle d'inclinaison aux images issues de la phase de calibration pour reproduire l'inclinaison du moyen d'acquisition d'images 2 du véhicule 1. La figure 8 donne un exemple d'une image résultant d'un tel traitement.

Tant que le système 10 ne détecte pas d'obstacle 40 sur la trajectoire du véhicule 1, celui-ci continue d'avancer de façon autonome le long de la trajectoire prédéfinie.

Cependant, si une différence significative existe entre les images issues de la phase de calibration post-traitement et les images acquises par le moyen d'acquisition d'image 2 du véhicule 1 circulant dans l'infrastructure 100, la présence d'un obstacle 40 sur la trajectoire du véhicule 1 est très probable. En particulier, dans le cas où le traitement appliqué aux images correspond à une soustraction d'image, si l'image issue de cette soustraction n'est pas vide, c'est-à-dire qu'elle comporte autre chose que des pixels noirs, la présence d'un obstacle 40 sur la trajectoire du véhicule 1 est très probable.

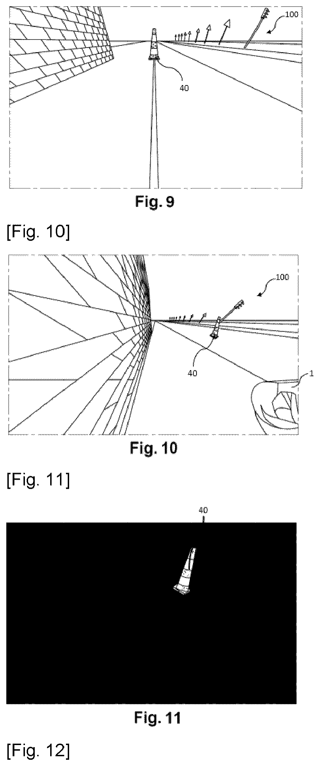

La figure 9 montre un exemple d'une image sans distorsion générée par l'unité centrale 20 à partir de l'image acquise par le moyen d'acquisition d'image 2 du véhicule 1 et transmise à l'unité centrale 20 par l'intermédiaire du premier module de communication 3. Sur cette image, un obstacle 40, ici un cône de chantier, est présent sur la trajectoire prévue pour le véhicule 1 automobile circulant dans l'infrastructure 100.

De manière similaire, la figure 10 montre un exemple d'une image sans distorsion générée par l'unité centrale 20 à partir de l'image acquise par le moyen d'acquisition d'image mobile 12. Sur cette image, le même obstacle 40 que sur la figure 9 est visible.

La figure 11 montre le résultat issu du traitement d'image appliqué à l'image de la figure 9 par l'unité centrale 20 : la soustraction de l'image de la figure 9 avec l'image issue de la phase de calibration n'est pas une matrice de pixels noirs ; l'obstacle 40 (le cône de chantier) est présent dans l'image résultante. Ce cas de figure peut être généralisé à divers types d'obstacles 40.

Dans le cas où le système 10 détecte un obstacle 40 sur la trajectoire du véhicule 1, le système 10 peut envoyer une commande d'arrêt du véhicule 1 pour l'immobiliser afin d'éviter audit véhicule 1 de percuter l'obstacle 40 détecté.

L'unité centrale 20 peut également appliquer un traitement aux images acquises d'une part par le moyen d'acquisition d'images 2 du véhicule 1 et transmise à l'unité centrale 20 par l'intermédiaire du premier module de communication 3, et d'autre part par le moyen d'acquisition d'images mobile 12 qui suit le véhicule 1 circulant dans l'infrastructure 100 tout au long de la trajectoire prédéterminée ; ce traitement d'image permet d'évaluer la distance qui sépare l'obstacle 40 du véhicule 1. Ce traitement s'apparente alors à une méthode de stéréovision, aussi connue sous l'expression « mesure stéréoscopique ». Ainsi, dans le cas où un obstacle 40 est effectivement détecté, l'unité centrale 20 a recours à une méthode de stéréovision afin de déterminer les dimensions, les formes et/ou les positions d'objets présents dans ces images et d'évaluer la distance qui sépare le véhicule 1 de l'obstacle 40 détecté.

Dans l'exemple décrit précédemment, l'unité centrale 20 applique une méthode de stéréovision à l'aide des images des figures 9 et 10, entre autres, pour évaluer la distance qui sépare le véhicule 1 de l'obstacle 40 détecté.

Diverses méthodes de stéréovision sont connues. Il est toutefois possible d'améliorer les résultats obtenus avec certaines méthodes de stéréovision en fournissant des images avec des caractéristiques spécifiques. Dans le cas de la méthode de stéréovision appliquée par l'unité centrale 20, celle-ci est plus efficace, c'est-à-dire plus précise dans l'estimation de la distance qui sépare le véhicule 1 d'un obstacle 40 détecté sur la trajectoire du véhicule 1, lorsque ledit obstacle 40 se situe au centre de l'image utilisée dans la méthode de stéréovision.

Ainsi, lorsqu'un obstacle 40 est détecté sur la trajectoire du véhicule 1, le procédé décrit précédemment comprend des étapes supplémentaires pour permettre une évaluation de la distance qui sépare le véhicule 1 de l'obstacle 40 détecté :
- le troisième module de communication 23 de l'unité centrale 20 envoie une commande au deuxième module de communication 13 du système de pilotage 16 du moyen d'acquisition d'image mobile 12 pour faire pivoter ledit moyen d'acquisition d'image mobile 12 autour du deuxième axe de rotation de sorte à centrer les images acquises par le moyen d'acquisition d'image mobile 12 sur l'obstacle 40 détecté ;
- le moyen d'acquisition d'images mobile 12 acquiert une troisième image de l'environnement à l'avant du véhicule 1, image dans laquelle l'obstacle 40 détecté se trouve sensiblement au centre ;
- le deuxième module de communication 13 du moyen d'acquisition d'image mobile 12 envoie la troisième image acquise au troisième module de communication 23 de l'unité centrale 20 de l'infrastructure 100 ;
- l'unité centrale 20 génère une image sans distorsion à partir des images reçues par le deuxième module de communication 13 du moyen d'acquisition d'image mobile 12 et par le premier module de communication 3 du moyen d'acquisition d'image 2 du véhicule 1 ;
- l'unité centrale 20 applique une méthode de stéréovision pour évaluer la distance entre le véhicule 1 et l'obstacle 40 détecté.

Ainsi, dans le cas où le système 10 détecte un obstacle 40 sur la trajectoire du véhicule 1, le troisième module de communication 23 de l'unité centrale 20 peut envoyer une commande de pivotement au deuxième module de communication 13 du système de pilotage 16 du moyen d'acquisition d'images mobile 12 pour pivoter le moyen d'acquisition d'images mobile 12 en rotation autour de son deuxième axe de rotation de sorte à centrer les images acquises par ledit moyen sur l'obstacle 40 détecté.

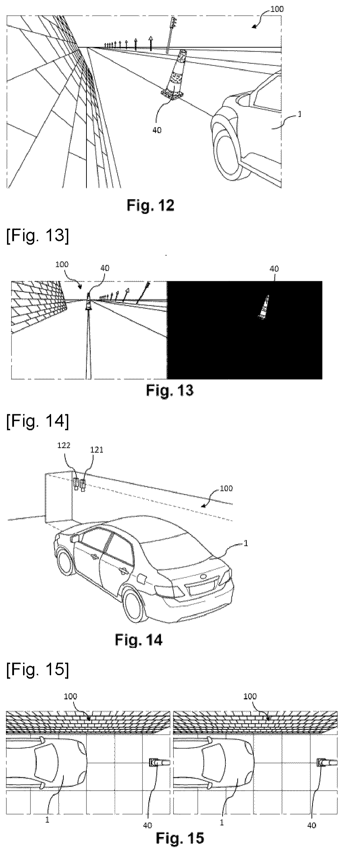

Une fois ce pivotement effectué, le véhicule 1 automobile apparaît dans les images acquises par ledit moyen d'acquisition d'images mobile 12, comme illustré sur l'exemple de la figure 12. Il s'agit alors de remplacer le véhicule 1 dans ces images par des pixels noirs avant ou au cours du traitement d'image appliqué par l'unité centrale 20. Pour ce faire, le premier module de communication 3 du véhicule 1 peut communiquer au troisième module de communication 23 de l'unité centrale 20 des données spécifiques du véhicule 1 automobile, telles que ses dimensions et/ou sa forme, ou toutes autres données permettant à l'unité centrale 20 de remplacer les pixels des images sur lesquelles apparait une portion du véhicule 1 par des pixels noirs, pour éviter une perturbation du traitement permettant la détection d'un obstacle 40 et/ou éviter une perturbation de la méthode de stéréovision appliquée par l'unité centrale 20 pour déterminer la distance entre le véhicule 1 et l'obstacle 40 détecté sur la trajectoire du véhicule 1.

Pour pouvoir réaliser le pivotement du moyen d'acquisition d'image autour du deuxième axe de rotation de sorte à centrer les images acquises par le moyen d'acquisition d'images sur l'obstacle 40 détecté, le au moins un moyen d'acquisition d'images mobile 12 du système est mobile en rotation autour d'un premier axe de rotation, généralement horizontal, et autour d'un deuxième axe de rotation, généralement vertical, comme expliqué plus haut dans la description.

La figure 13 montre un exemple des images obtenues avec une méthode de stéréovision appliquée par l'unité centrale 20 permettant d'évaluer la distance entre le véhicule automobile 1 et l'obstacle 40 détecté. Dans ces images, les pixels correspondant à l'obstacle 40 sont identifiés et le point 3D correspondant est calculé. Pour ce faire, l'unité centrale 20 trace la droite reliant les pixels correspondant à l'obstacle 40 dans l'image acquise par le moyen d'acquisition d'images 2 agencé sur la face avant du véhicule 1 et le centre dudit moyen d'acquisition d'images 2. De manière similaire, l'unité centrale 20 trace la droite reliant les pixels correspondant à l'obstacle 40 dans l'image acquise par le moyen d'acquisition d'images mobile 12 et le centre dudit moyen d'acquisition d'images mobile 12. Le point 3D recherché correspond à l'intersection des deux droites. Calculer le point 3D de l'obstacle 40 détecté permet ensuite d'évaluer la distance qui sépare le véhicule 1 automobile dudit obstacle 40.

Un autre mode de réalisation peut être envisagé pour le système 10 d'aide à la manœuvre et au stationnement. Un tel mode de réalisation du système est illustré sur la figure 14.

Dans ce deuxième mode de réalisation, le système comprend deux moyens d'acquisition d'images mobiles 121, 122. Ces deux moyens d'acquisition d'images mobiles 121, 122 peuvent être identiques, c'est-à-dire présenter les mêmes caractéristiques techniques, ou bien différents.

Les deux moyens d'acquisition d'images mobiles 121, 122 sont agencés sur un support 14 situé au-dessus du véhicule 1. Le support 14 peut se présenter sous la forme d'un rail ou d'une structure en treillis. Dans le cas où l'infrastructure 100 comprend un plafond, le support 14 est par exemple agencé au niveau dudit plafond. Alternativement, le support 14 peut prendre la forme d'une grue articulée sur laquelle sont agencés les deux moyens d'acquisition d'images 121, 122. Les deux moyens d'acquisition d'images mobiles 121, 122 sont orientés vers le sol de l'infrastructure 100 de sorte à acquérir des images d'un environnement à l'avant du véhicule 1 circulant dans l'infrastructure 100.

Dans ce deuxième mode de réalisation, un premier moyen d'acquisition d'images mobile 121 est aligné verticalement avec le moyen d'acquisition d'images 2 disposé à l'avant dudit véhicule 1 et un deuxième moyen d'acquisition d'images mobile 122 est juxtaposé longitudinalement devant le premier moyen d'acquisition d'images mobile 121. Le premier moyen d'acquisition d'images mobile 121 et le deuxième moyen d'acquisition d'images mobile 122 sont espacés de quelques centaines de millimètres, par exemple 200mm.

Dans ce deuxième mode de réalisation du système 10, le système de pilotage 16 est configuré pour déplacer les deux moyens d'acquisition d'images mobiles 121, 122 de sorte à acquérir des images d'un environnement à l'avant du véhicule 1 circulant de manière autonome dans l'infrastructure 100 suivant une trajectoire prédéterminée. La figure 15 montre un exemple des images acquises par les deux moyens d'acquisition d'images mobiles 121, 122. Les deux moyens d'acquisition d'images mobiles 121, 122 du système 10 permettent ainsi d'acquérir chacun une série d'images avec des points de vue différents du véhicule 1 circulant dans l'infrastructure 100 suivant une trajectoire prédéterminée.

Dans ce deuxième mode de réalisation du système 10 d'aide à la manœuvre et au stationnement d'un véhicule 1 dans une infrastructure 100, le moyen d'acquisition d'images 2 du véhicule 1 sert uniquement à la détection initiale d'un obstacle 40 sur la trajectoire prédéterminée destinée à être empruntée par ledit véhicule 1. Ce sont les images acquises par les deux moyens d'acquisition d'images mobiles 121, 122 qui sont utilisées par l'unité centrale 20 pour appliquer la méthode de stéréovision afin d'évaluer la distance entre le véhicule 1 et l'obstacle 40.

Optionnellement, le système de pilotage 16 peut être configuré pour déplacer le deuxième moyen d'acquisition d'images mobile 122 indépendamment du premier moyen d'acquisition d'images mobile 121. Dans cette option, les deux moyens d'acquisition d'images mobile 121, 122 ne sont pas forcément déplacés de manière synchronisée. Ainsi, le deuxième moyen d'acquisition d'images mobile 122 peut être écarté du premier moyen d'acquisition d'images mobile 121, par exemple pour être rapproché de l'obstacle 40 détecté, dans le but de rendre la stéréovision plus efficace et rendre les calculs de distance entre le véhicule 1 et l'obstacle 40 plus précis. Autrement dit, le deuxième moyen d'acquisition d'images mobile 122 peut être écarté du premier moyen d'acquisition d'images mobile 121 dans le but d'acquérir des images dans lesquelles l'obstacle 40 détecté se situe au centre des images. Ceci permet d'augmenter la fiabilité des résultat issus de la méthode de stéréovision appliquée par l'unité centrale 20 aux images acquises par les deux moyens d'acquisition d'images mobiles 121, 122, et donc d'évaluer plus précisément la distance entre le véhicule 1 et l'obstacle 40 détectée sur la trajectoire du véhicule 1 circulant dans l'infrastructure 100.

## Revendications

1. Système (10) d'aide à la manœuvre et au stationnement d'un véhicule (1) dans une infrastructure (100), le véhicule (1) étant équipé d'un moyen d'acquisition d'images (2) disposé à l'avant dudit véhicule (1), et d'un premier module de communication (3), le système (10) étant **caractérisé en ce qu'**il comprend :
- au moins un moyen d'acquisition d'images mobile (12) en translation selon une première direction sur un support (14) de l'infrastructure (100), le moyen d'acquisition d'images mobile (12) étant configuré pour acquérir des images d'un environnement à l'avant du véhicule (1) circulant de manière autonome dans l'infrastructure (100) suivant une trajectoire prédéterminée ;
- un système de pilotage (16) configuré pour déplacer le moyen d'acquisition d'images mobile (12) sur le support (14) de l'infrastructure (100) de manière à suivre le véhicule (1) circulant dans l'infrastructure (100), le système de pilotage (16) et le au moins un moyen d'acquisition d'images mobile (12) étant équipé d'un deuxième module de communication (13) ;
- une unité centrale (20) comprenant un troisième module de communication (23) configuré pour recevoir des images acquises par le moyen d'acquisition d'images (2) disposé à l'avant dudit véhicule (1) et des images acquises par le moyen d'acquisition d'images mobile (12), l'unité centrale (20) étant configurée pour appliquer un traitement d'image auxdites images permettant d'identifier un obstacle (40) sur la trajectoire du véhicule (1) circulant dans l'infrastructure (100), le troisième module de communication (23) de l'unité centrale (20) étant également configuré pour communiquer avec le premier module de communication (3) du véhicule (1) pour échanger des données concernant ledit véhicule (1), et configuré pour communiquer avec le deuxième module de communication (13) du système de pilotage (16) et du moyen d'acquisition d'images mobile (12), le troisième module de communication (23) de l'unité centrale (20) étant configuré pour transmettre des coordonnées de positionnement, notamment des coordonnées GPS d'une trajectoire, au premier module de communication (3) du véhicule (1) et/ou des coordonnées de positionnement au deuxième module de communication (13) du système de pilotage (16) et du moyen d'acquisition d'images mobile (12) et **caractérisé en ce que** le moyen d'acquisition d'images mobile (12) est configuré pour reproduire la focale de l'image et les résolutions horizontale et verticale de l'image du moyen d'acquisition d'images (2) du véhicule (1).

2. Système selon la revendication précédente, **caractérisé en ce que** le moyen d'acquisition d'images mobile (12) en translation est également mobile en rotation autour d'un premier axe de rotation de sorte que le système de pilotage (16) puisse pivoter le moyen d'acquisition d'images mobile (12) autour dudit premier axe de rotation.

3. Système selon la revendication précédente, **caractérisé en ce que** le moyen d'acquisition d'images mobile (12) est également mobile en rotation autour d'un deuxième axe de rotation de sorte que le système de pilotage (16) puisse pivoter le moyen d'acquisition d'images mobile (12) autour dudit deuxième axe de rotation et **en ce que** ce deuxième axe de rotation est sensiblement perpendiculaire au premier axe de rotation.

4. Système selon l'une des revendication précédentes, **caractérisé en ce que** le moyen d'acquisition d'images mobile (12) est également mobile en translation selon une deuxième direction sur un support (14) de l'infrastructure (100), la deuxième direction étant sensiblement perpendiculaire à la première direction.

5. Système (10) selon la revendication 1, **caractérisé en ce qu'**il comprend deux moyens d'acquisition d'images mobiles (121, 122), les deux moyens d'acquisition d'images étant agencés sur un support (14) situé au-dessus du véhicule (1), les deux moyens d'acquisition d'images mobiles (121, 122) étant orientés vers le sol de l'infrastructure (100) de sorte à acquérir des images d'un environnement à l'avant du véhicule (1) circulant dans l'infrastructure (100), un premier moyen d'acquisition d'images mobile (121) étant aligné verticalement avec le moyen d'acquisition d'images (2) disposé à l'avant dudit véhicule (1), un deuxième moyen d'acquisition d'images mobile (122) étant juxtaposé longitudinalement devant le premier moyen d'acquisition d'images mobile (121).

6. Système selon la revendication précédente, **caractérisé en ce que** le système de pilotage (16) est configuré pour déplacer le deuxième moyen d'acquisition d'images mobile (122) indépendamment du premier moyen d'acquisition d'images mobile (121).

7. Système selon l'une des revendication précédentes, **caractérisé en ce que** le support (14) comprend un rail ou un agencement de rails et **en ce que** le système de pilotage (16) est configuré pour déplacer le au moins un moyen d'acquisition d'images mobile (12) le long dudit rail ou le long desdits rails de l'agencement.

8. Procédé d'aide à la manœuvre et au stationnement d'un véhicule (1) à partir d'un système selon l'une des revendications précédentes, **caractérisé en ce qu'**il comprend les étapes suivantes :
- le premier module de communication (3) du véhicule (1) envoie des données dudit véhicule (1) au troisième module de communication (23) de l'unité centrale (20) ;
- le moyen d'acquisition d'images mobile (12) est positionné à la même coordonnée longitudinale que le moyen d'acquisition d'images (2) agencé sur le véhicule (1) ;
- le moyen d'acquisition d'images (2) agencé sur le véhicule (1) acquiert une première image de l'environnement à l'avant du véhicule (1);
- le premier module de communication (3) du véhicule (1) envoie la première image acquise au troisième module de communication (23) de l'unité centrale (20) de l'infrastructure (100) ;
- l'unité centrale (20) génère une image sans distorsion à partir de l'image envoyée par le premier module de communication (3) du véhicule (1) ;
- la position du moyen d'acquisition d'images mobile (12) est mise à jour ;
- le moyen d'acquisition d'images mobile (12) acquiert une deuxième image de l'environnement à l'avant du véhicule (1) ;
- le deuxième module de communication (23) du moyen d'acquisition d'image mobile (12) envoie la deuxième image acquise au troisième module de communication (23) de l'unité centrale (20) de l'infrastructure (100) ;
- l'unité centrale (20) génère une image sans distorsion à partir de l'image reçue ;
- l'unité centrale (20) applique un traitement d'image aux images sans distorsion pour détecter un ou plusieurs potentiels obstacles (40) sur la trajectoire du véhicule (1).

9. Procédé selon la revendication précédente à partir d'un système selon la revendication 3, **caractérisé en ce qu'**il comprend également les étapes suivantes lorsqu'un obstacle (40) est détecté sur la trajectoire du véhicule (1) :
- le troisième module de communication (23) de l'unité centrale (20) envoie une commande au deuxième module de communication (13) du système de pilotage (16) du moyen d'acquisition d'image mobile (12) pour faire pivoter ledit moyen d'acquisition d'image mobile (12) autour du deuxième axe de rotation de sorte à centrer les images acquises par le moyen d'acquisition d'image mobile (12) sur l'obstacle (40) détecté ;
- le moyen d'acquisition d'images mobile (12) acquiert une troisième image de l'environnement à l'avant du véhicule (1) ;
- le deuxième module de communication (23) du moyen d'acquisition d'image mobile (12) envoie la troisième image acquise au troisième module de communication (23) de l'unité centrale (20) de l'infrastructure (100) ;
- l'unité centrale (20) génère une image sans distorsion à partir des images reçues par le deuxième module de communication (13) du moyen d'acquisition d'image mobile (12) et par le premier module de communication (3) du moyen d'acquisition d'image (2) du véhicule (1);
- l'unité centrale (20) applique un méthode de stéréovision pour évaluer la distance entre le véhicule (1) et l'obstacle (40) détecté.
